# DEMANDE DE BREVET EUROPEEN

(11) **EP 3 606 109 A1**
(43) Date de publication de la demande: **05.02.2020**
(21) Numéro de dépôt: 19185869.5
(22) Date de dépôt: 11.07.2019
(51) Int. Cl.: H04W 4/30, H04W 4/80, H05B 6/06, A47J 27/00

(54) **PROCÉDÉ D'APPAIRAGE AUTOMATIQUE POUR LA COMMUNICATION ENTRE UN ARTICLE CULINAIRE ET UN FOYER D'UNE TABLE DE CUISSON À INDUCTION**

(30) Priorité: 01.08.2018 FR 1857231
(71) Demandeur: SEB S.A., 69130 Ecully (FR)
(72) Inventeur: TADLA, Jérémy, 69380 LOZANNE (FR); SCHMERBER, Louis, Sherbrooke, Québec J1NY02 (CA)
(74) Mandataire: Soares, Luis Filipe

(57) **Abrégé**

Procédé de communication entre un article culinaire (1) et une table de cuisson à induction (5), le procédé de communication comprenant les étapes suivantes : (E1) une étape de disposition d'un article culinaire (1) sur un des foyers (3) de la table à induction, (E2) une étape de génération d'un flux magnétique (35) par le foyer (3) sur lequel est disposé l'article culinaire (1), (E3) une étape de demande d'appairage comprenant un envoi d'au moins une trame de demande d'appairage (31) par le module de communication de l'article culinaire (1) ou l'envoi d'au moins une trame de demande d'appairage correspondante (33) par le dispositif de communication de la table de cuisson à induction, (E4) une étape d'écoute par le dispositif de communication de la table de cuisson à induction ou, le cas échéant, par le module de communication de l'article culinaire, l'étape d'écoute comprenant une réception de l'au moins une trame de demande d'appairage (31) ou, le cas échéant, de l'au moins une trame de demande d'appairage correspondante (33), (E5) une étape d'appairage entre l'article culinaire (1) et la table de cuisson à induction comprenant un échange d'informations.

## Description

### Domaine de l'invention

La présente invention concerne un procédé de communication d'un article culinaire et d'un foyer d'une table de cuisson à induction.

### Art antérieur

Il est connu de disposer d'un article culinaire comprenant un dispositif de mesure d'un champ magnétique émis par un foyer d'une table de cuisson à induction. Cette disposition permet à l'article culinaire de déterminer qu'il est à proximité du foyer.

Il est également connu de disposer d'un article culinaire comprenant un module de communication configuré pour échanger des informations avec un dispositif de communication de la table de cuisson à induction.

Cette disposition permet d'assister l'utilisateur lors de la réalisation d'une recette de cuisine car cette communication permet de regrouper différentes informations relatives à la cuisson ou à la préparation d'aliments de la recette. Il est par exemple possible de déterminer si une cuisson d'un aliment est en cours.

Il est également connu de commander à distance la cuisson par l'intermédiaire de la poignée de l'article culinaire ou de surveiller la cuisson à distance en récupérant des informations provenant d'un capteur de température de l'article culinaire.

Cependant, il peut s'avérer difficile d'ajouter un article culinaire à un réseau de communication comprenant une table de cuisson à induction.

En effet, l'utilisateur doit effectuer un certain nombre d'étapes manuelles qui peuvent s'avérer fastidieuses. C'est par exemple le cas si ces étapes doivent être réalisées en même temps qu'une recette de cuisine.

Il est également connu, par exemple du document WO2015128578A2, de communiquer une information depuis un article culinaire vers une table de cuisson à induction dans un mode de communication du type balise Bluetooth® à basse consommation ne nécessitant pas un appairage entre deux appareils précis.

Cependant, ce mode de communication est unidirectionnel, et n'est pas destiné à l'échange d'informations sécurisé entre deux appareils précis.

La présente invention vise à résoudre tout ou partie des inconvénients mentionnés ci-dessus.

### Exposé de l'invention

A cet effet, la présente invention concerne un procédé de communication entre un article culinaire et une table de cuisson à induction, le procédé de communication comprenant les étapes suivantes :
- une étape de disposition d'un article culinaire sur un des foyers de la table à induction, ledit article culinaire comprenant une source d'énergie, une unité de traitement, un dispositif de mesure et un module de communication, et, la table de cuisson à induction comprenant un dispositif de communication,
- une étape de génération d'un flux magnétique par le foyer sur lequel est disposé l'article culinaire, réalisée soit suite à une indication directe à la table de cuisson à induction de la part de l'utilisateur relative à une identification du foyer sur lequel est disposé l'article culinaire, soit suite à une sous-étape de scrutation par génération séquentielle de flux magnétiques par les différents foyers de la table de cuisson à induction jusqu'à ce que le dispositif de mesure de l'article culinaire détecte le flux magnétique provenant du foyer sur lequel l'article culinaire est disposé,
- une étape de demande d'appairage comprenant un envoi d'au moins une trame de demande d'appairage selon un protocole de communication sans fil par le module de communication de l'article culinaire ou l'envoi d'au moins une trame de demande d'appairage correspondante selon le protocole de communication sans fil par le dispositif de communication de la table de cuisson à induction, la demande d'appairage étant déclenchée d'une part par la table de cuisson à induction lors de la génération du flux magnétique et d'autre part par l'article culinaire lors de la détection du flux magnétique provenant du foyer sur lequel l'article culinaire est disposé,
- une étape d'écoute par le dispositif de communication de la table de cuisson à induction ou, le cas échéant, par le module de communication de l'article culinaire, l'étape d'écoute comprenant une réception de l'au moins une trame de demande d'appairage ou, le cas échéant, de l'au moins une trame de demande d'appairage correspondante,
- une étape d'appairage entre l'article culinaire et la table de cuisson à induction comprenant un échange d'informations entre le module de communication de l'article culinaire et le dispositif de communication de la table de cuisson à induction selon le protocole de communication sans fil, les informations échangées comprenant notamment une indication d'identification du foyer sur lequel l'article culinaire est disposé et une indication d'identification de l'article culinaire.

Lorsque l'article culinaire est déposé sur l'un des foyers de la table de cuisson à induction, l'appairage est réalisé sans validation manuelle de l'utilisateur au niveau de l'article culinaire.

Le procédé de communication permet ainsi d'automatiser la mise en place d'un réseau de communication selon le protocole de communication sans fils car plusieurs articles culinaires peuvent être installés sur différents foyers. Le procédé de communication permet de savoir quel article culinaire est associé avec quel foyer sans que l'utilisateur n'ait de renseignement spécifique à fournir.

En effet, l'utilisateur n'a plus besoin d'effectuer d'opérations manuelles propres à l'appairage entre l'article culinaire et le foyer de la table de cuisson à induction.

Toutefois, optionnellement, l'utilisateur peut interagir avec la table de cuisson à induction pour donner une indication directe concernant le foyer utilisé.

Selon un aspect de l'invention, l'indication directe correspond à une information envoyée à un système central de gestion de la table de cuisson à induction. De préférence, le système central de gestion comprend un processeur.

Le procédé de communication apporte également de la souplesse au réseau de communication. Un article culinaire déconnecté de ce réseau de communication pourra se reconnecter automatiquement. La réalisation de recettes de cuisine comportera aussi moins d'opérations manuelles à réaliser par l'utilisateur. Ces opérations manuelles peuvent correspondre à la signification au système central de gestion qu'un article culinaire est bien disposé sur le bon foyer.

Par génération d'un flux magnétique, il est entendu émission continue d'un flux magnétique, la génération séquentielle correspondant à une génération d'un flux magnétique à tour de rôle par les foyers de la table de cuisson à induction.

Selon un aspect de l'invention, le dispositif de communication et/ou le module de communication sont agencés pour échanger des informations selon un mode de communication point à point.

Selon un aspect de l'invention, la table de cuisson à induction comprend une interface utilisateur apte à engendrer l'indication directe suite à une interaction avec l'utilisateur. De préférence, l'interface utilisateur comprend un élément de commande, en particulier pourvu d'au moins un bouton, et un afficheur tel qu'un écran, apte à afficher des indications relatives aux informations échangées par la table de cuisson à induction et l'article culinaire. En particulier, l'élément de commande est agencé pour envoyer des informations de commande au système central de gestion.

L'afficheur peut également ou alternativement comprendre au moins un voyant par exemple au moins une diode électroluminescente.

Selon un aspect de l'invention, le flux magnétique détecté par le dispositif de mesure de l'article culinaire présente une caractéristique d'identification relative au foyer sur lequel est disposé l'article culinaire.

Cette disposition permet de sécuriser l'appairage automatique puisqu'une reconnaissance du flux magnétique permet de s'assurer que l'appairage est réalisé entre l'article culinaire et le foyer sur lequel est disposé l'article culinaire.

Selon un aspect de l'invention, la sous-étape de scrutation comprend une opération préalable de réveil de l'unité de traitement et du module de communication de l'article culinaire par un dispositif de détection de l'article culinaire, le dispositif de détection étant agencé pour détecter le flux magnétique émis par le foyer sur lequel est disposé l'article culinaire, ledit dispositif de détection étant disposé dans l'article culinaire.

En d'autres termes, le réveil de l'unité de traitement et du module de communication de l'article culinaire correspond au passage d'un premier mode de fonctionnement dans lequel l'unité de traitement et le module de communication ne sont pas agencés pour fonctionner selon l'ensemble de leurs possibilités à un deuxième mode de fonctionnement dans lequel l'unité de traitement et le module de communication sont totalement fonctionnels.

Cette disposition permet de limiter la consommation d'énergie de l'article culinaire puisque le fonctionnement de l'unité de traitement et du module de communication peut être réduit lorsqu'aucun flux magnétique n'est détecté.

Selon un aspect de l'invention, le dispositif de détection du flux magnétique émis par le foyer comprend un dispositif électronique agencé pour rendre fonctionnel l'unité de traitement en fonction de caractéristiques du flux magnétique, lorsque le dispositif de détection détecte le flux magnétique.

Selon un aspect de l'invention, le dispositif de mesure comprend au moins un module de mesure de température.

Cette disposition permet de mesurer une température relative à la cuisson réalisée par l'article culinaire. De préférence, les informations échangées lors de l'étape d'appairage comprennent des informations de mesures en provenance du module de mesure de température.

Selon un aspect de l'invention, le dispositif de mesure comprend une bobine comprenant une ou plusieurs spires. Ainsi lorsqu'un flux magnétique traverse la bobine, une tension est induite aux bornes de la bobine. Cette tension induite est l'image du flux magnétique.

De préférence, la bobine comprend une spire unique appelée fil conducteur. En particulier, le fil conducteur réalise une boucle configurée pour détecter la présence d'un champ magnétique.

Selon une possibilité, le dispositif de mesure comprend une thermistance à Coefficient de Température Négatif du type thermistance CTN. La thermistance CTN avec ses fils de connexion constitue une boucle de courant. Lorsqu'un flux magnétique traverse cette boucle, une tension induite, image de ce flux magnétique, apparait aux bornes de la thermistance CTN.

Selon une autre possibilité, le dispositif de mesure du champ magnétique comprend un thermocouple. Le thermocouple constitue une boucle de courant. Si un flux magnétique traverse cette boucle, une tension induite, image de ce flux, apparait aux bornes du thermocouple.

Selon une autre possibilité, le dispositif de mesure du champ magnétique est un capteur de champ magnétique. Ce capteur peut être un capteur a effet Hall ou un capteur de type magnétorésistance. Ce capteur permet de mesurer un niveau de champ magnétique et donc de détecter la présence de flux magnétique dans son environnement proche.

Selon un aspect de l'invention, le dispositif de mesure du champ magnétique est positionné dans une surface de cuisson de l'article culinaire. De préférence, le dispositif de mesure du champ magnétique peut être positionné dans n'importe quelle partie de l'article culinaire comme la poignée lorsque celui-ci en comprend une.

Selon un aspect de l'invention, la source d'énergie comprend une batterie d'alimentation apte à alimenter l'article culinaire après une action sur un dispositif de mise sous tension de l'article culinaire, la source d'énergie comprenant de préférence un dispositif de récupération d'énergie du flux magnétique du foyer apte à recharger la batterie d'alimentation à partir du flux magnétique.

Cette disposition permet d'utiliser l'article culinaire indépendamment de la table de cuisson à induction car la batterie permet d'emmagasiner de l'énergie.

Selon un aspect de l'invention, le dispositif de récupération d'énergie comprend des bobines réceptrices agencées pour transmettre le courant ainsi récupéré à l'unité de traitement et/ou au module de communication en vue de les alimenter et sous réserve que le dispositif de mise sous tension soit activé.

Selon un aspect de l'invention, le procédé de communication comprend une étape d'activation du dispositif de communication de la table de cuisson à induction, l'étape d'activation engendrant l'émission par le dispositif de communication de la table de cuisson à induction de l'au moins une trame de demande d'appairage correspondante et la réception de l'au moins une trame de demande d'appairage.

Ainsi le dispositif de communication de la table de cuisson à induction peut ne pas être activé en permanence, c'est-à-dire ne pas envoyer et recevoir des trames de demande d'appairage en permanence.

Cette disposition permet de limiter l'utilisation d'énergie correspondant à la réalisation de l'étape d'activation.

Selon un aspect de l'invention, l'étape d'activation est réalisée suite à une étape de détection d'une sollicitation de la table de cuisson à induction.

Cette disposition permet de réaliser l'étape d'activation automatiquement dès lors qu'une sollicitation est détectée. Selon un aspect de l'invention, la détection de la sollicitation est réalisée par l'intermédiaire d'un capteur de la table de cuisson à induction. De préférence, le capteur est configuré pour détecter une vibration de la table de cuisson à induction, la vibration correspondant au dépôt de l'article culinaire sur le foyer de la table de cuisson à induction.

Selon un aspect de l'invention, le protocole de communication sans fil est un protocole de communication par radiofréquence, notamment du type Bluetooth Low Energy®.

Selon un aspect de l'invention, l'article culinaire comprend une poignée dans laquelle sont agencés la source d'énergie, l'unité de traitement et le module de communication.

Selon un aspect de l'invention, la batterie d'alimentation est comprise dans une poignée de l'article culinaire ou dans une surface de cuisson de l'article culinaire apte à coopérer avec le foyer.

Selon un aspect de l'invention, la poignée est amovible.

Cette disposition permet d'utiliser la poignée avec plusieurs contenant différents pour à chaque fois constituer un article culinaire différent.

Selon un aspect de l'invention, les étapes du procédé de communication tel que décrit précédemment peuvent être réalisées pour plusieurs foyers de la table de cuisson à induction avec plusieurs articles culinaires, notamment simultanément ou de manière à ce que des étapes différentes de plusieurs procédés de communications relatifs à plusieurs articles culinaires se chevauchent.

Selon un aspect de l'invention, les articles culinaires peuvent être tous types d'appareils compatibles avec des foyers à induction. Il s'agit par exemple de : poêles, casseroles, , autocuiseurs, cuiseurs, cuiseurs vapeur, marmites, faitouts, sauteuses, grils, tajines, woks, couscoussiers, services à fondue, etc.

Selon un aspect de l'invention, chaque article culinaire est constitué des mêmes éléments et chaque foyer de la table de cuisson à induction est constitué des mêmes éléments de manière à ce que le procédé de communication détaillé plus haut puisse être mis en oeuvre selon toutes les associations possibles entre articles culinaires et foyers.

Selon un aspect de l'invention, l'unité de traitement est une unité électronique capable d'effectuer des opérations logiques primaires sur des signaux en entrée et de retourner un résultat de cette opération en sortie.

De préférence, l'unité de traitement et le module de communication sont compris dans la poignée.

Selon un aspect de l'invention, l'unité de traitement est configurée pour être programmable sans fil et à distance par un terminal de communication portable. L'échange de données entre la mémoire de l'unité de traitement et le terminal de communication portable peut se faire dans les deux sens. Un utilisateur peut donc commander à distance l'unité de traitement du signal.

Selon un aspect de l'invention, l'article culinaire est configuré pour transmettre une information de consigne relative au fonctionnement du foyer sur lequel est disposé l'article culinaire selon le protocole de communication sans fil.

Selon un aspect de l'invention, l'unité de traitement et/ou le module de communication sont amovibles du reste de l'article culinaire.

Selon un aspect de l'invention, l'article culinaire comprend également un afficheur relié à l'unité de traitement. De préférence, l'afficheur permet de visualiser des informations comprises dans l'unité de traitement.

En particulier, l'afficheur est compris dans la poignée et/ou l'afficheur est amovible de la poignée et de l'unité de traitement.

Selon un aspect de l'invention, l'unité de traitement comprend un processeur. Selon un aspect de l'invention, la table de cuisson à induction comprend un système central de gestion configuré pour commander le fonctionnement du foyer, du dispositif de communication, du capteur et/ou du foyer additionnel. De préférence, le système central de gestion comprend un processeur.

Les différents aspects définis ci-dessus non incompatibles peuvent être combinés.

### Brève description des figures

L'invention sera mieux comprise à l'aide de la description détaillée qui est exposée ci-dessous en regard du dessin annexé dans lequel :
- la figure 1 est une vue schématique en coupe d'un article culinaire et d'une table de cuisson à induction ;
- la figure 2 est une vue schématique en coupe de l'article culinaire et du terminal de communication portable ;
- la figure 3 est une vue de dessus schématique de l'article culinaire ;
- la figure 4 est un schéma représentant les étapes d'un procédé de communication de l'article culinaire et de la table de cuisson à induction.

### Description en référence aux figures

Dans la description détaillée qui va suivre des figures définies ci-dessus, les mêmes éléments ou les éléments remplissant des fonctions identiques pourront conserver les mêmes références de manière à simplifier la compréhension de l'invention.

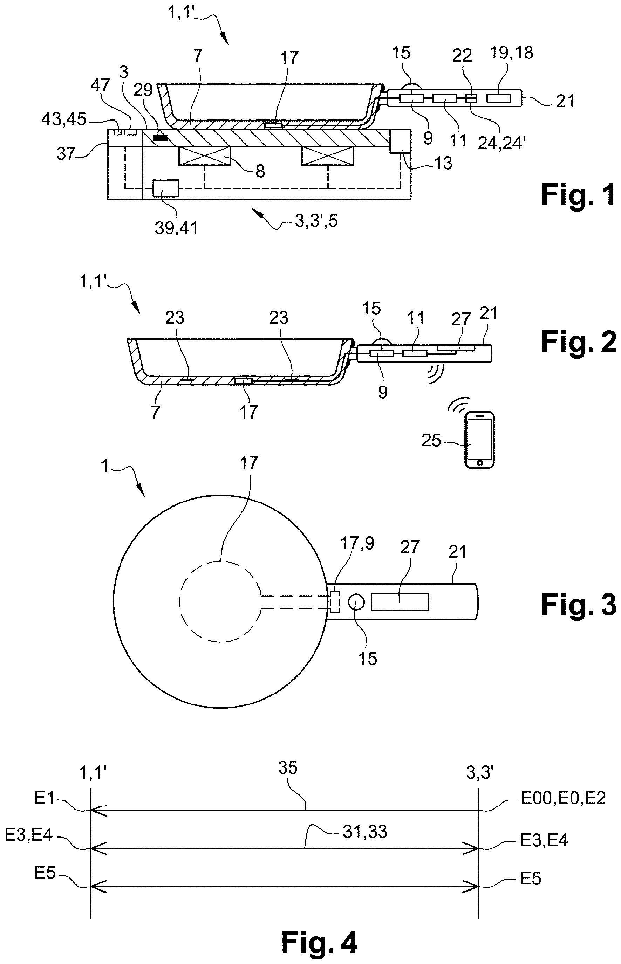

Comme illustré aux figures 1 à 3, un article culinaire 1 est agencé pour être disposé sur un foyer 3 d'une table de cuisson à induction 5. Le foyer 3 coopère avec une surface de cuisson 7 de l'article culinaire 1 de manière à engendrer la cuisson. Pour ce faire, le foyer comprend des bobines 8.

Le foyer 3 est agencé pour générer un flux magnétique présentant une caractéristique d'identification de manière à ce qu'il soit possible d'identifier le foyer 3.

L'article culinaire 1 peut être à titre d'exemple : une poêle, une casserole, un autocuiseur, un cuiseur, un cuiseur vapeur, une marmite, un faitout, une sauteuse, un gril, un tajine, un wok, un couscoussier, un service à fondue, etc.

L'article culinaire 1 comprend une unité de traitement 9, un module de communication 11 configuré pour échanger des informations avec un dispositif de communication 13 de la table de cuisson à induction 5. L'article culinaire 1 comprend en outre un dispositif de mise sous tension 15 agencé pour mettre sous tension l'unité de traitement 9 et le module de communication 11.

L'unité de traitement 9 est une unité électronique capable d'effectuer des opérations logiques primaires sur des signaux en entrée et de retourner un résultat de cette opération en sortie.

L'article culinaire 1 comprend également un dispositif de mesure 17 agencé pour la détection de flux magnétiques ou de champs magnétiques.

Le dispositif de mesure 17 est une bobine comprenant une spire. Ainsi lorsqu'un flux magnétique traverse la bobine, une tension est induite aux bornes de la bobine. Cette tension induite est l'image du flux magnétique.

La bobine comprend une spire unique appelée fil conducteur. Le fil conducteur réalise une boucle configurée pour détecter la présence d'un champ magnétique.

Selon une autre possibilité, le dispositif de mesure 17 du champ magnétique peut être une thermistance à Coefficient de Température Négatif du type thermistance CTN. La thermistance CTN avec ses fils de connexion constitue une boucle de courant. Lorsqu'un flux magnétique traverse cette boucle, une tension induite, image de ce flux magnétique, apparait aux bornes de la thermistance CTN.

Selon une autre possibilité, le dispositif de mesure 17 du champ magnétique peut être un thermocouple. Le thermocouple constitue une boucle de courant. Si un flux magnétique traverse cette boucle, une tension induite, image de ce flux, apparait aux bornes du thermocouple.

Selon une autre possibilité, le dispositif de mesure 17 du champ magnétique peut être un capteur de champ magnétique. Ce capteur peut être un capteur a effet Hall ou un capteur de type magnétorésistance. Ce capteur permet de mesurer un niveau de champ magnétique et donc de détecter la présence de flux magnétique dans son environnement proche.

Le dispositif de mesure 17 est positionné dans la surface de cuisson 7 de l'article culinaire.

Le dispositif de mesure 17 comprend également au moins un module de mesure de température pour mesurer une température relative à la cuisson réalisée par l'article culinaire 1.

L'article culinaire 1 comprend également une source d'énergie 18, telle qu'une batterie d'alimentation 19 disposée dans une poignée 21 de l'appareil culinaire 1. Optionnellement, l'appareil culinaire 1 peut comprendre un dispositif de récupération d'énergie 22 pourvu de bobines réceptrices 23 agencées pour transmettre un courant récupéré au niveau du foyer à la batterie d'alimentation 19. Le courant est récupéré à partir d'un flux magnétique produit par le foyer 3.

L'article culinaire 1 comprend également un dispositif de détection 24 agencé pour détecter un flux magnétique émis par le foyer 3 sur lequel est disposé l'article culinaire 1.

Le dispositif de détection 24 du flux magnétique émis par le foyer 3 comprend un dispositif électronique 24' agencé pour rendre fonctionnel l'unité de traitement 9 en fonction de caractéristiques du flux magnétique, lorsque le dispositif de détection 24 détecte le flux magnétique.

La poignée 21 peut être fixe ou amovible par rapport au reste de l'article culinaire 1. L'unité de traitement 9 et le module de communication 11 sont compris dans la poignée 21.

L'unité de traitement 9 est configurée pour être programmable sans fil et à distance par un terminal de communication portable 25. L'échange de données entre la mémoire de l'unité de traitement 9 et le terminal de communication portable 25 peut se faire dans les deux sens. Un utilisateur peut donc commander à distance l'unité de traitement 9.

L'article culinaire 1 est configuré pour transmettre une information de consigne relative au fonctionnement du foyer 3 sur lequel est disposé l'article culinaire 1.

L'article culinaire 1 comprend également un afficheur 27 relié à l'unité de traitement 9. L'afficheur 27 permet de visualiser des informations comprises dans l'unité de traitement 9.

En particulier, l'afficheur 27 est compris dans la poignée 21 et/ou l'afficheur 27 est amovible de la poignée 21 et de l'unité de traitement 9. L'unité de traitement 9 comprend un processeur.

La table de cuisson à induction 5 comprend par ailleurs un capteur 29 configuré pour détecter une sollicitation de la table de cuisson à induction 5. Le capteur 29 est configuré pour détecter une vibration correspondant au dépôt de l'article culinaire 1 sur le foyer 3.

La table de cuisson à induction 5 comprend également un système central de gestion 39 configuré pour commander le fonctionnement des foyers 3, du dispositif de communication 13 et des capteurs 29, le système central de gestion 39 comprenant un processeur 41.

La table de cuisson à induction 5 comprend une interface utilisateur 37 permettant de piloter le fonctionnement du foyer 3. L'utilisateur peut aussi utiliser cette interface utilisateur 37 pour saisir une indication directe relative à une identification du foyer 3 sur lequel est disposé l'article culinaire 1.

L'indication directe correspond à une information envoyée au système central de gestion 39 de la table de cuisson à induction 5.

L'interface utilisateur 37 comprend un élément de commande 43, en particulier pourvu d'au moins un bouton 45, et un afficheur 47 tel qu'un écran, apte à afficher des indications relatives aux informations échangées par la table de cuisson à induction 5 et l'article culinaire 1. En particulier, l'élément de commande 43 est agencé pour envoyer des informations de commande au système central de gestion 39.

La table de cuisson à induction 5 peut comprendre plusieurs foyers 3, 3' tels que décrits précédemment. Ainsi la table de cuisson à induction 5 comprend un foyer additionnel 3' configuré pour générer un flux magnétique additionnel présentant une caractéristique d'identification additionnelle.

Alternativement, les foyers 3, 3' peuvent tous présenter la même caractéristique d'identification sans que cela ne pose de problème étant donné que la table de cuisson à induction 5 peut déterminer quel foyer 3, 3' est en cours d'utilisation.

Plusieurs articles culinaires 1, 1' peuvent coopérer avec la table de cuisson à induction 5. Dans la suite du texte en référence aux figures, il est considéré que l'article culinaire 1 est disposé sur le foyer 3 dans un but de simplification de la rédaction. Toutefois toutes les combinaisons entre les articles culinaires 1, 1' et les foyers 3, 3' sont envisagées, le procédé décrit étant identique.

Comme illustré à la figure 4, un procédé de communication de l'article culinaire 1 ou de l'article culinaire additionnel 1' d'une part, et du foyer 3 ou du foyer additionnel 3' d'autre part, comprend les étapes décrites ci-après.

Une étape d'activation E0 du dispositif de communication 13 de la table de cuisson à induction 5 consiste à engendrer la réception d'au moins une trame de demande d'appairage 31 émise par le module de communication 11 et l'émission par le dispositif de communication 13 d'au moins une trame de demande d'appairage correspondante 33.

L'au moins une trame de demande d'appairage 31 et l'au moins une trame de demande d'appairage correspondante 33 sont émises selon un protocole de communication sans fil. Le protocole de communication sans fil est un protocole de communication par radiofréquence, notamment du type Bluetooth Low Energy®.

L'étape d'activation E0 est réalisée suite à une étape de détection E00 d'une sollicitation de la table de cuisson à induction 5 pour réaliser l'étape d'activation E0 automatiquement dès lors qu'une sollicitation est détectée.

La détection de la sollicitation est réalisée par l'intermédiaire du capteur 29 de la table de cuisson à induction 5 configuré pour détecter une vibration de la table de cuisson à induction 5, la vibration correspondant au dépôt de l'article culinaire 1 sur le foyer 3 de la table de cuisson à induction 5.

Alternativement l'étape d'activation E0 peut être réalisée suite à un démarrage manuel de la table de cuisson à induction 5. Dans ce cas, le capteur 29 n'est pas nécessaire.

Une étape de disposition E1 d'un article culinaire 1 sur un des foyers 3 de la table à induction 5 est ensuite réalisée.

Une étape de génération E2 d'un flux magnétique 35 par le foyer 3 sur lequel est disposé l'article culinaire 1 est ensuite réalisée. Cette étape fait soit suite à une indication directe à la table de cuisson à induction 5 de la part de l'utilisateur relative à une identification du foyer 3 sur lequel est disposé l'article culinaire 1, soit suite à une sous-étape de scrutation par génération séquentielle de flux magnétiques 35 par les différents foyers 3, 3' de la table de cuisson à induction 5 jusqu'à ce que le dispositif de mesure 17 détecte le flux magnétique 35 provenant du foyer 3 sur lequel l'article culinaire 1 est disposé.

La sous-étape de scrutation comprend une opération préalable de réveil de l'unité de traitement 9 et du module de communication 11 de l'article culinaire 1 par un dispositif de détection 24 de l'article culinaire 1. Le dispositif de détection est agencé pour détecter le flux magnétique 35 émis par le foyer 3 sur lequel est disposé l'article culinaire 1.

Une étape de demande d'appairage E3 comprend un envoi de l'au moins une trame de demande d'appairage 31 ou l'envoi de l'au moins une trame de demande d'appairage correspondante 33.

La demande d'appairage est déclenchée d'une part par la table de cuisson à induction 5 lors de la génération du flux magnétique 35 et d'autre part par l'article culinaire 1 lors de la détection du flux magnétique 35 provenant du foyer 3 sur lequel l'article culinaire 1 est disposé.

Une étape d'écoute E4 est ensuite réalisée par le dispositif de communication 13 de la table de cuisson à induction 5 ou, le cas échéant, par le module de communication 11 de l'article culinaire 1.

L'étape d'écoute E4 comprend une réception de l'au moins une trame de demande d'appairage 31 ou, le cas échéant, de l'au moins une trame de demande d'appairage correspondante 33.

Une étape d'appairage E5 entre l'article culinaire 1 et la table de cuisson à induction 5 comprend un échange d'informations entre le module de communication 11 de l'article culinaire 1 et le dispositif de communication 13 de la table de cuisson à induction 5 selon le protocole de communication sans fil.

Les informations échangées comprennent une indication d'identification du foyer 3 sur lequel l'article culinaire 1 est disposé et une indication d'identification de l'article culinaire 1.

Le procédé de communication ainsi décrit permet de limiter les manipulations pour qu'une communication bidirectionnelle soit établie entre l'article culinaire 1 et la table de cuisson à induction 5.

Il est ainsi aisé d'ajouter un article culinaire 1 à un réseau de communication selon le protocole de communication utilisé. En effet, la table de cuisson à induction 5 peut échanger des informations avec plusieurs articles culinaires 1, 1'.

Lorsque la communication avec un article culinaire 1, 1' est interrompue, cette communication est ensuite automatiquement rétablie car le procédé de communication décrit plus haut ne nécessite pas de manipulation de la part de l'utilisateur et peut être exécuté automatiquement.

Comme il va de soi, l'invention ne se limite pas à la seule forme d'exécution décrite ci-dessus à titre d'exemple, elle en embrasse au contraire toutes les variantes de réalisation.

## Revendications

1. Procédé de communication entre un article culinaire (1) et une table de cuisson à induction (5), le procédé de communication comprenant les étapes suivantes :
- (E1) une étape de disposition d'un article culinaire (1) sur un des foyers (3) de la table à induction (5), ledit article culinaire (1) comprenant une source d'énergie (18), une unité de traitement (9), un dispositif de mesure (17) et un module de communication (11), et, la table de cuisson à induction (5) comprenant un dispositif de communication (13),
- (E2) une étape de génération d'un flux magnétique (35) par le foyer (3) sur lequel est disposé l'article culinaire (1), réalisée soit suite à une indication directe à la table de cuisson à induction (5) de la part de l'utilisateur relative à une identification du foyer (3) sur lequel est disposé l'article culinaire (1), soit suite à une sous-étape de scrutation par génération séquentielle de flux magnétiques (35) par les différents foyers (3) de la table de cuisson à induction (5) jusqu'à ce que le dispositif de mesure (17) de l'article culinaire (1) détecte le flux magnétique (35) provenant du foyer (3) sur lequel l'article culinaire (1) est disposé,
- (E3) une étape de demande d'appairage comprenant un envoi d'au moins une trame de demande d'appairage (31) selon un protocole de communication sans fil par le module de communication (11) de l'article culinaire (1) ou l'envoi d'au moins une trame de demande d'appairage correspondante (33) selon le protocole de communication sans fil par le dispositif de communication (13) de la table de cuisson à induction (5), la demande d'appairage étant déclenchée d'une part par la table de cuisson à induction (5) lors de la génération du flux magnétique (35) et d'autre part par l'article culinaire (1) lors de la détection du flux magnétique (35) provenant du foyer (3) sur lequel l'article culinaire (1) est disposé,
- (E4) une étape d'écoute par le dispositif de communication (13) de la table de cuisson à induction (5) ou, le cas échéant, par le module de communication (11) de l'article culinaire (1), l'étape d'écoute comprenant une réception de l'au moins une trame de demande d'appairage (31) ou, le cas échéant, de l'au moins une trame de demande d'appairage correspondante (33),
- (E5) une étape d'appairage entre l'article culinaire (1) et la table de cuisson à induction (5) comprenant un échange d'informations entre le module de communication (11) de l'article culinaire (1) et le dispositif de communication (13) de la table de cuisson à induction (5) selon le protocole de communication sans fil, les informations échangées comprenant notamment une indication d'identification du foyer (3) sur lequel l'article culinaire (1) est disposé et une indication d'identification de l'article culinaire (1).

2. Procédé de communication selon la revendication 1, dans lequel la sous-étape de scrutation comprend une opération préalable de réveil de l'unité de traitement (9) et du module de communication (11) de l'article culinaire (1) par un dispositif de détection (24) de l'article culinaire (1), le dispositif de détection étant agencé pour détecter le flux magnétique (35) émis par le foyer (3) sur lequel est disposé l'article culinaire (1), ledit dispositif de détection (24) étant disposé dans l'article culinaire (1).

3. Procédé de communication selon la revendication 2, dans lequel le dispositif de détection du flux magnétique (35) émis par le foyer (3) comprend un dispositif électronique (24') agencé pour rendre fonctionnel l'unité de traitement (9) en fonction de caractéristiques du flux magnétique (35), lorsque le dispositif de détection détecte le flux magnétique (35).

4. Procédé de communication selon l'une des revendications 1 à 3, dans lequel le dispositif de mesure (17) comprend au moins un module de mesure de température.

5. Procédé de communication selon l'une des revendications 1 à 4, dans lequel la source d'énergie (18) comprend une batterie d'alimentation (19) apte à alimenter l'article culinaire (1) après une action sur un dispositif de mise sous tension (15) de l'article culinaire (1), la source d'énergie (18) comprenant de préférence un dispositif de récupération d'énergie (22) du flux magnétique (35) du foyer apte à recharger la batterie d'alimentation (19) à partir du flux magnétique (35).

6. Procédé de communication selon l'une des revendications 1 à 5, comprenant (E0) une étape d'activation du dispositif de communication (13) de la table de cuisson à induction (5), l'étape d'activation engendrant l'émission par le dispositif de communication (13) de la table de cuisson à induction (5) de l'au moins une trame de demande d'appairage correspondante (33) et la réception de l'au moins une trame de demande d'appairage (31).

7. Procédé de communication selon l'une des revendications 1 à 6 dans lequel le protocole de communication sans fil est un protocole de communication par radiofréquence, notamment du type Bluetooth Low Energy®.

8. Procédé de communication selon l'une des revendications 1 à 7, dans lequel l'article culinaire (1) comprend une poignée (21) dans laquelle sont agencés la source d'énergie (18), l'unité de traitement (9) et le module de communication (11).

9. Procédé de communication selon la revendication 8, dans lequel la poignée (21) est amovible.
